# EUROPEAN PATENT SPECIFICATION

(11) **EP 1 464 478 B1**
(45) Date of publication and mention of the grant of the patent: **25.01.2006**
(21) Application number: 04008138.2
(22) Date of filing: 02.04.2004
(51) Int. Cl.: B32B 7/06, B32B 3/24, B44F 1/10, G09F 15/02

(54) **Poster as well as methods and materials for its manufacturing**
Plakat sowie Materialien und Verfahren zur Herstellung
Affiche et matériaux et procédés pour sa fabrication

(30) Priority: 04.04.2003 CH 6062003
(43) Date of publication of application: 06.10.2004
(73) Proprietor: Fiechter, André, 8915 Hausen am Albis (CH)
(72) Inventor: Fiechter, André, 8915 Hausen am Albis (CH)
(74) Representative: Blum, Rudolf Emil

(56) References cited:
- WO-A-00/56556
- WO-A-99/65680
- GB-A- 2 217 256
- GB-A- 2 244 585
- US-A- 5 609 938

## Description

### Field of the Invention

The present invention relates to an adhesion compound which is appropriate for manufacturing graphical products, especially for one-sided printed graphical products which can be seen through from the other side, as well as such a graphical product and a method for manufacturing such products.

### Background of the Invention

Already known are products with a thin foil which are also known as transfer images. Such products usually comprise a plastic foil with an adhesive which is protected by a removable liner, said liner being a silicone coated paper or a plastic liner. When the product is being used, the liner will first be removed such as to uncover the adhesive and the sticky side of the product will then be fixed on the specified area. The disadvantage of such sticky foils is that the liner will be thrown away after the foil has been fixed on the desired area. Moreover, the complete removal of such foils, or of such adhesive, respectively, can be problematic. A further disadvantage is that the picture which has been applied on such a foil is either opaque or the contrast is unsatisfying. Also already known are transparent cling foils that can be applied to smooth surfaces, such as glass, and that can be removed without leaving traces of adhesive (see e.g. GB 2 217 256). Also these foils have to be protected by a liner up to their use, since otherwise they would cling to each other or to themselves.

WO 00/56556 describes non-adherent image carriers that are part of a set further comprising a double sided adhesive carrier. The adhesive carrier preferably has good adhesion to the substrate and releasable adhesion to the image carrier, such that the image carrier can be replaced by another one while the adhesive carrier remains in place.

GB 2 244 585 A discloses a poster to be stuck on a window comprising a cling or self-adhesive layer on one side of a transparent material and at least one printed matter comprising layer as well as a one-colored layer, said adhesive poster being perforated.

Also already known are one sided see-through, punched self-adhesive foils that on the other side are provided with an image. US 5,609,938 discloses one-way vision display panels that are perforated plastic panel assemblies having a rear surface provided with a light absorbing color coating and a front surface carrying an image. In specific embodiments, either a white opaque intermediate panel may be present or a light reflective image may be applied onto a black substrate. Such image carrying panel assembly is then provided with an adhesive and a peelable layer and the whole assembly is perforated. As an alternative to a panel that on one surface is provided with adhesive, a panel comprising a static cling material may be used, and as an alternative to a plastic panel assembly a display panel assembly may comprise a single perforated membrane, printed on one side with a light reflective color image and printed or coated on a reverse side with a light absorbing dark color coating.

Another embodiment, in particular for interior mounting, is described in WO 99/65680. The graphic article described therein is made of a perforated imaginable film layer and a non perforated attachment component. Said graphic article is produced in that the perforated imaginable film layer composed of an opaque light absorbing layer and an opaque, preferably light reflecting layer with an imaginable surface is imaged and then the imaged surface is adhered to a heat activated adhesive layer of the attachment component that on the second surface has a layer of pressure-sensitive adhesive. On the light absorbing side a non perforated transparent protective foil can be provided.

The self-adhesive foils described above usually are intended for being applied to the interior or exterior surface of a window.

Also with these foils, the liner on which such foils are delivered, will be thrown away after the application, and also with these foils the removal from the surface on which they have been stuck, or their replacement, respectively, can be a problem because the adhesive used for the fixation, on the one hand needs to have an adequately good adhesion to ensure that the foil cannot easily be peeled off under environmental influences or due to mild vandalism, respectively, but on the other hand, after a certain time, it should be easily removable without leaving traces and under application of special, mild methods of removal. The trace-less removal is important since the transparency of foils subsequently applied on the same surface should not be affected.

Further disadvantages of these self-adhesive, one sided see-through foils are that their application has to be done on specific surfaces and, on the manufacturing side, the liner that is punched simultaneously with the self-adhesive foil will be disposed as rubbish.

Furthermore, if the perforated foils are imaged, color may pass through the perforations and pollute the light absorbing surface, thereby affecting the through view.

Thus, there is still a need for one-side transparent (see-through), on the other side image carrying graphical products and intermediates and production methods that do overcome the above mentioned disadvantages.

### Brief Disclosure of the Invention

Hence, it is a general object of the invention to provide an adhesion compound suitable as intermediate in the production of a poster material or poster of the present invention, in particular a poster material that is see-through from one side due to regularly allocated holes and that has a surface which is printable on the first side and a surface which is light absorbing on the second side, and whereby the poster material is non-adhesive and a poster wherein the poster material carries information on the light reflecting, first side.

It is another object of the present invention to provide a method for producing a printable adhesion compound and for the preparation of a non-adhesive poster.

It has now been found that a suitable intermediate in the production of a non-adhesive, one-sided see-through poster material or poster of the present invention is an adhesion compound manifested by the features that it comprises at least a poster material with a poster substrate and a carrier material with a carrier substrate, wherein said poster material and said carrier material are separably connected together by an adhesive layer, and wherein said poster material has on a first side a printable or with an image receptive coating directly or after pre-treatment providable surface and on a second side a light absorbing surface, and wherein said adhesive layer has a better adhesion towards said carrier material than towards said poster material such that after separation of said poster material and said carrier material said adhesive layer remains on said carrier material, and wherein said poster material has in at least an area regularly or in a regular pattern distributed holes, such that in separated form it is see-through from said second side with said light absorbing surface.

### Brief Description of the Drawings

The invention will be better understood and objects other than those set forth above will become apparent when consideration is given to the following detailed description thereof. Such description makes reference to the annexed drawings, wherein:
Figure 1 shows a scheme of the method for the production of a poster described in the present invention wherein the poster material gets punched without additional carrier/liner.
Figure 2 shows a variant of the procedure of Figure 1, wherein the poster material attached to a self-adhesive carrier material gets punched.
Figures 3A-3F show cross sections of poster material in different phases of the process;

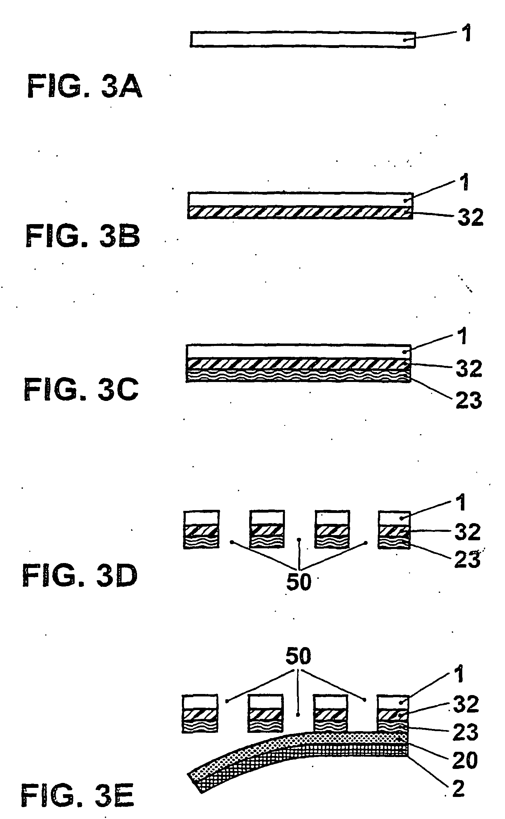

Figure 3A shows the poster substrate,
Figure 3B shows the poster substrate of Figure 3A provided with a light absorbing layer,
Figure 3C shows the poster material of Figure 3B with an additional layer e.g. a separating layer,
Figure 3D shows the poster material of Figure 3C after perforation,
Figure 3E shows the perforated poster material during its application onto a non-perforated carrier/liner material, said carrier/liner material being provided with an adhesive layer, and

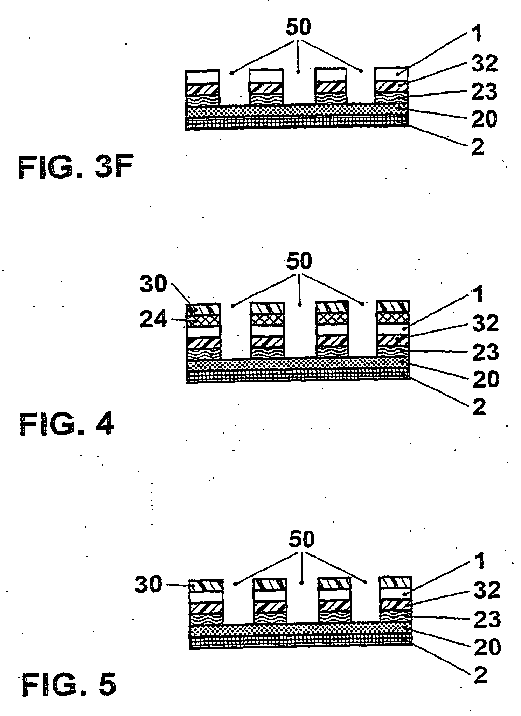

Figure 3F shows the poster material of Figure 3E in completely laminated condition.
Figure 4 shows a cross section of the adhesion compound of Figure 3F after application of an image receptive layer and an image.
Figure 5 shows a cross section of the adhesion compound shown in Figure 3F, wherein the poster material is directly provided with an image.

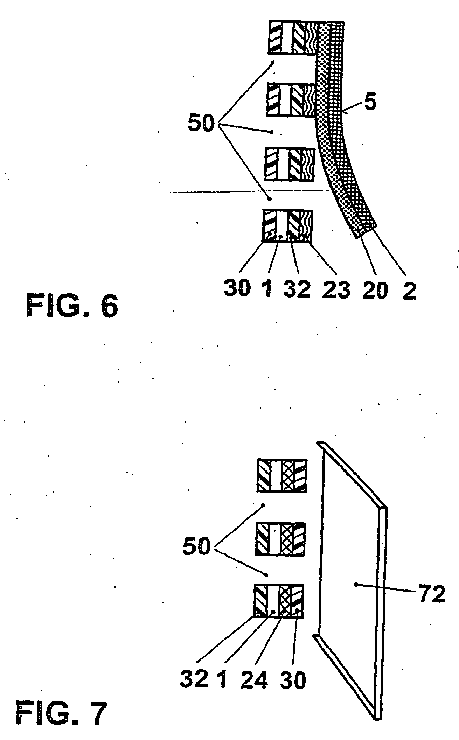

Figure 6 shows a cross section of the release of the finished poster of Figure 5 from the self-adhesive carrier.
Figure 7 shows the step of the application of a poster made of a poster material including an image receptive layer to e.g. a window pane.

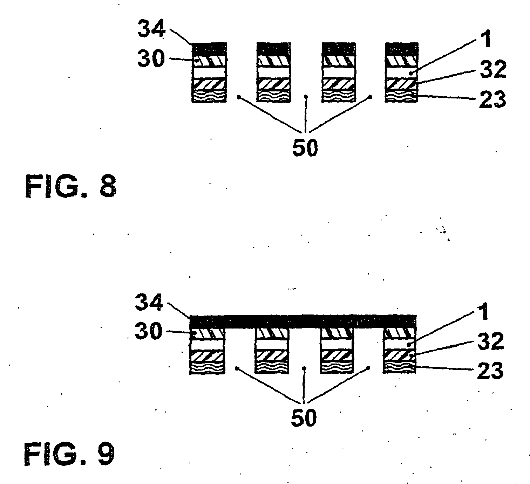

Figure 8 shows a cross section of the poster analogous to the one of Figure 6 with a protective layer applied over the image.
Figure 9 shows a cross section of a similar embodiment as shown in Figure 8 whereby the protective layer is a continuous protective film.

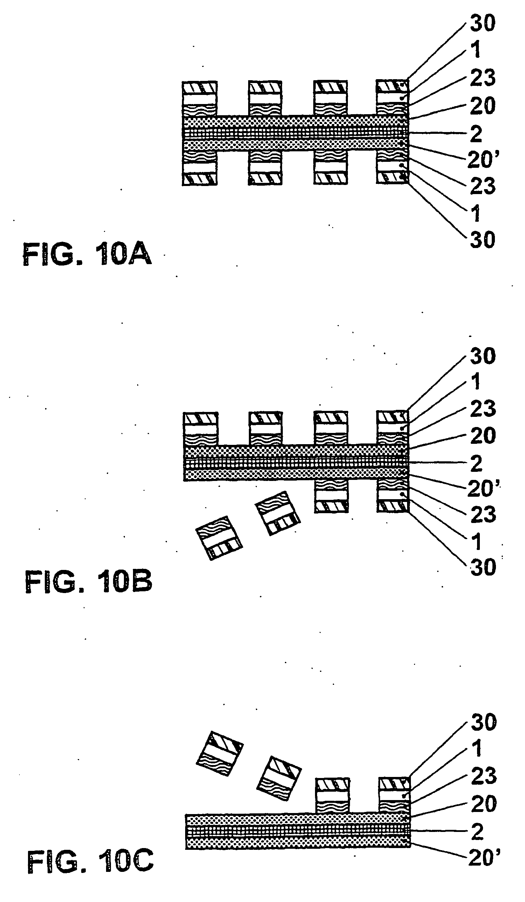

Figures 10A-10C show cross sections of a material saving alternative, the material saving being due to using a carrier/liner material that is on both sides provided with an adhesive layer and thereon mounted poster material;
Figure 10A shows such a material in delivery status,
Figure 10B shows the material shown in Figure 10A during the release of one poster, and
Figure 10C shows the material shown in Figure 10B after complete removal of the first and beginning removal of the second poster.

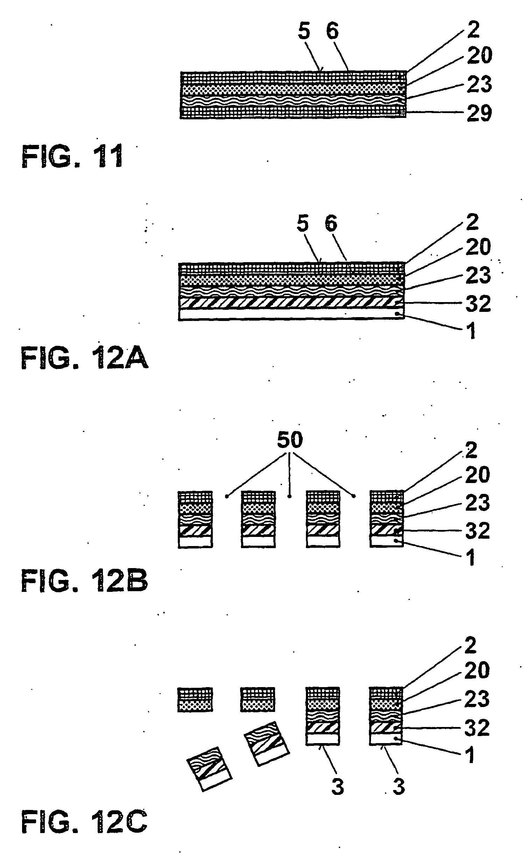

Figure 11 shows a cross section of a material of the state of the art for the production of a sticking poster.
Figures 12A-12D show cross sections of the improvements of the present invention;
Figure 12A shows an inventive adhesion compound, wherein a one-sided, light absorbing poster material that is not coated with adhesive, is used for protecting the adhesive layer, or as alternative to the liner of the material of Figure 11, respectively.
Figure 12B shows the material of Figure 12A in punched condition,
Figure 12C shows the punched material of Figure 12B during separation of the adhesive coated material from the not adhesive coated poster material, and

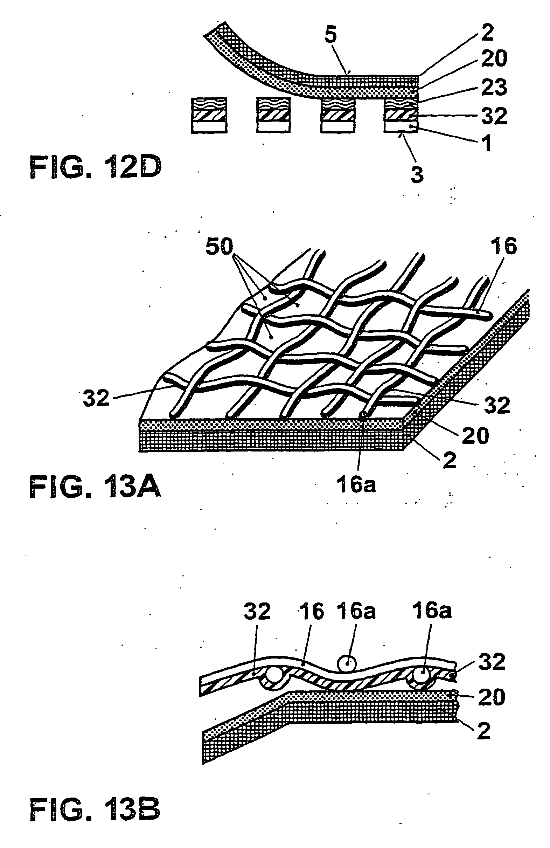

Figure 12D shows the application of a new, non-perforated, adhesive coated carrier onto the adhesive-free poster material of Figure 12C.
Figures 13A-13D show an analogous material whereby in this case the poster material does not have to be perforated since it is a translucent fibrous material e.g. textures;
Figure 13A shows the one-sided, black coated fibrous material,
Figure 13B shows a cross section of the one-sided, black coated fibrous material with the black layer adjacent to an adhesive carrier/liner layer,

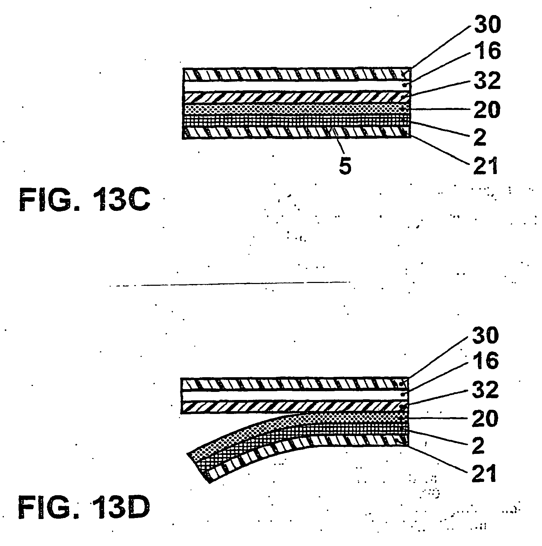

Figure 13C shows a cross section of the fibrous material that is provided with an image applied onto an adhesive carrier/liner that also caries an image, and
Figure 13D shows a cross section of the disconnection of the adhesion compound of Figure 13C.

### Legend of the Figures

- 1: poster substrate (material)
- 2: carrier/liner substrate (material)
- 3: surface/side 1 of the poster material/substrate
- 4: surface/side 2 of the poster material/substrate
- 5: surface/side 1 of the carrier material/substrate or liner material/substrate
- 6: surface/side 2 of the carrier material/substrate or liner material/substrate
- 16: fibrous material (long grain)
- 16A: fibrous material, (short grain)
- 20,20': adhesive layer
- 21: information/image on carrier/liner
- 23: separation/release layer
- 24: image receptive layer
- 29: removable carrier/liner
- 30: information/image
- 32: light absorbing layer
- 34: protective layer
- 46: hole cutting tool / die cutting tool
- 50: hole
- 70: roll
- 71: transportation roll
- 72: window pane

### Definitions

In order to ensure that the terms used herein are interpreted as intended, some definitions are given below:

Poster material/poster substrate designates a material that possesses the therefor mentioned features. It can consist of a poster substrate or it can comprise several additional layers, provided that the minimum features attributed to the poster material are fulfilled. The way of manufacturing, or the kind of the application of the layers/coatings, respectively, is irrelevant.

Carrier material/liner material/carrier substrate/liner substrate designates at least a carrier/liner material/substrate, yet can also be a material comprising diverse layers/coatings, provided that the minimum features attributed to the carrier material are fulfilled. The way of manufacturing, or the kind of the application of the coatings/layers, respectively, is irrelevant.

Within the scope of the present invention, a material is designated a substrate, if it provides all features requested for the poster material or the carrier material, or if it is a bearing or integral constituent, respectively, of these materials, that together with other layers or coatings forms said materials. Materials suitable to be used as substrates are e.g. metals, plastics, glass, cellulose products, such as paper or cardboard, synthetic papers, textures, non woven fabrics as well as multi-layer materials e.g. co-extrusion products and laminates made from one or more of the previously mentioned materials.

Light absorbing means that at least 60 % of the impinging light gets absorbed, preferably 80 %, particularly 100 %.

Light reflecting means that at least 60 % of the impinging light gets reflected, preferably 80 %, particularly 100 %.

Coating means a layer material that is applied to another material in liquid or solid form. Examples of coatings include adhesive coatings, primer coatings, release coatings (e.g. silicones), light absorbing coatings such as black pigmented plastic coatings, light reflecting coatings such as white pigmented plastic coatings and metalizations. Methods for the application/attachment of coatings are printing, reverse roll coating, blade coating etc. A coating is - in contrast to a substrate - not a bearing or integral constituant, i.e. it is neither responsible for the shape nor for the mechanical strength.

Non-adhesive, non-adherent means that there is neither an adhesive coating nor electrostatic forces leading to an adhesion on specific surfaces.

The terms "holey", "provided with holes", "punched" , "perforated'', "die cut" all describe materials wherein material-containing and material-free areas alternate in a regular pattern whereby some of the terms specify products that have been produced by a specific manufacturing step or a method. The term "holey" is used to designate a material that is translueent/see-through due to any kind of holes, i.e. it encompasses open-work textiles as well as originally continuous material that has been provided with holes by perforation, punching, die cutting etc.

In the scope of the present invention, hole means every material-free area or opening, respectively, in a material. Holes may be made directly during the production of e.g. textures or interlaced yarns, or they can be made subsequently by hand or machine. They can have several shapes, e.g. round, multigonal or polygonal, regular or irregular, symmetric or asymmetric, and within one area different hole shapes, hole patterns and hole sizes can occur provided that the eye recognizes the structure or its sequence as regular.

Regular in relation to the arrangement of the holes means that the transparency is not affected due to irregularities. The regularity of holey fibrous material is mostly lower than the regularity of perforations. The regularity of perforations should be such that the material thickness between proximate holes, or hole paths, respectively, varies by at most 20%, preferably by at most 10%, most preferred by 0%.

Auxiliary layers may e.g. be primer-coatings, adhesive coatings within the poster material or the carrier material, respectively, separating/release coatings that facilitate the separation of materials, and barrier coatings that prevent an undesired mixing of materials / diffusion. Auxiliary layers may be provided as additional layers wherever required or necessary.

Additional layers are e.g. layers/coatings that improve the end product (the poster) yet have no impact on the adhesion compound and its usage during the manufacturing process of the poster. Such coatings in particular are protective layers that are used above the information for its protection or for the generation of special effects. Such layers are in particular layers that serve for the reduction of abrasion, for the increase of light resistance, for the increase of weather resistance and/or for the protection against graffiti.

The terms "side" and "surface" in relation to the poster material, the carrier material or the adhesion compound, respectively, are largely used synonymous.

The description of a surface as being light absorbing or light reflecting or appearing light absorbing or light reflecting includes also surfaces that comprise colorless or transparent, respectively, coatings/layers between the light absorbing or light reflecting coatings and the surface, or between the light absorbing or light reflecting substrates and the surface.

In the specification, the term "adhesion compound" is used for all materials that at least comprise one poster material and one carrier material and that are separably joined together. Depending on the step of the method in which they appear, they may be further specified, e.g. as basic adhesion compound for an adhesion compound that is provided with holes, as perforated adhesion compound for an adhesion compound that comprises holes passing through the whole compound, and as printable adhesion compound for an adhesion compound that comprises all coatings and characteristics which are at least desirable for the application of information. Any of the adhesion compounds of the present invention is suitable as an intermediate in different steps of the production of a non adhesive poster of the present invention.

### Detailed Description of the Invention

The inventive adhesion compound that is suitable for being used in the production of a non-adhesive, one-sided see-through poster comprises at least a poster material with a poster substrate 1 and a carrier material with a carrier substrate 2 wherein said poster material and said carrier material are separably joined together by an adhesive layer 20, and wherein said poster material has on a first side a printable or with an image receptive coating directly or after pre-treatment providable surface 3 and on a second side a light absorbing surface 4, and wherein said adhesive layer 20 has a better adhesion towards said carrier material than towards said poster material such that after separation of said poster material and said carrier material said adhesive layer 20 remains on said carrier material, and wherein said poster material has in at least an area regularly or in a regular pattern distributed holes 50, such that it is see-through from said second side with said light absorbing surface 4.

Within the scope of the present invention, several process intermediates are referred to as adhesion compounds, provided that they comprise the above mentioned characteristics.

The poster material or poster of the present invention has no adhesive properties at all, i.e. also no electrostatic or other adhesion properties, such as so called "cling" properties.

Specific embodiments of the adhesion compounds of the present invention comprise one or any reasonable combination of two or more of the following additional features, whereby such additional features can make the compound suitable as intermediate in another step of a poster production method.

An inventive adhesion compound may e.g. comprise a poster material that is translucent/see-through (open-work, perforated) due to regularly spread material-comprising areas and material-free areas (holes 50).

Such arrangement of material-comprising areas and material-free areas may occur e.g. in a regular fibrous material or it can be created by means of perforation of a previously non-translucent/not-see-through, persistent material. In a preferred adhesion compound of the present invention, the holes are perforation holes or punching holes, respectively.

In a preferred embodiment of the adhesion compound the side of the poster material facing the carrier material is the second, light absorbing side 4. This is in particular the case when the adhesion compound comprises a poster material already having holes 50 on a continuous carrier 2.

In one embodiment of the adhesion compound, the poster material has on its first side a surface 3 that is directly printable with information and in another embodiment it comprises a surface 3 that can be provided with an image receptive layer/coating 24. The surface that can be provided with an image receptive coating 24 can be directly furnished with the image receptive layer/coating 24 or after a pre-treatment e.g. a primer treatment and/or a corona treatment etc. of the surface.

A poster material with printable surface 3 may for example be a printable material such as paper or a material on which an image receptive layer/coating 24 has already been applied e.g. a foil coated with an ink jet layer. A surface 3 being able to be provided with an image receptive layer 24 may be any surface that allows to be coated or otherwise combined with or connected to a respective layer by means of fluid application, welding or laminating without harming the adhesion compound.

The adhesion of the poster material on the carrier material may be obtained through e.g. extrusion, welding or preferably gluing, whereby for the gluing process an adhesive layer 20 is arranged between the poster material and the carrier material. The adhesive layer/coating 20 has a stronger adhesion towards the carrier material than towards the poster material such that after separating the poster material and the carrier material, said adhesive layer 20 remains on the carrier material. In particular in adhesion compounds with perforated poster material and continuous carrier material an adhesive layer 20 is in general present.

The poster material may be a poster substrate 1 or it may comprise such substrate 1. The poster substrate 1 may be a uniform material or a material compound, especially a laminate, made from equal or different materials, e.g. differently colored foils.

The first side of the poster material may possess a light reflecting surface 3, e.g. a light reflectingly provided foil that is part of the poster substrate 1, or a light reflective layer/coating or a light reflective print. Very light colors such as light yellow, light beige and especially white are generally considered as light reflecting. Light reflecting metalizations, such as aluminizations, may be used in order to obtain special effects.

Also the light absorbing surface 4 may especially be provided by a coating on the respective side of the poster material or by a suitably colored poster substrate 1 itself. Very dark colors, particularly black, are considered as suitably light absorbing. Any auxiliary layers that are applied on the light absorbing surface 4 such as layers which regulate the adhesion or increase the abrasion resistance and/or UV resistance shall not have an impact on the light absorption. Within the scope of this invention, such auxiliary coatings/layers are considered as belonging to the poster material.

If suitably equipped, the carrier material present in the perforation step can also be used, namely as a one side information carrying from the other side see-through product of the state of the art, i.e. for images (information) that can be fixed on e.g. window panes. Thus a specific adhesion compound of the present invention has a carrier material with a first side or surface 5, respectively, that is printable and a second side or surface 6, respectively, that is light absorbing. The first side 5 of the carrier material preferably also has a light reflecting surface. Between the carrier material and the poster material such an adhesion compound in general has an adhesive layer/coating 20 with a stronger adhesion towards the carrier material than towards the poster material whereby the light absorbing second side 6 of the carrier material is turned towards the adhesive layer/coating 20 and the poster material.

The light absorbing or light reflecting surfaces 5, 6 of the carrier material may be generated according to the description above concerning the poster material. The carrier substrate 2 used for the carrier material may also be a material compound, particularly a laminate.

Thus, in a specific adhesion compound intermediate of the present invention, both the poster material and the carrier material are in at least one area provided with regularly distributed holes 50, said holes 50 preferably being perforation holes 50 or punching holes 50, respectively, much preferred identical holes 50, although it is as well possible that the holes are not all identical but form a regularly repeating pattern of holes.

After perforation, the carrier material of such adhesion compound may be used as an adhesive, one sided transparent poster material according to the prior art. Besides of positive ecological effects (savings in material and energy) this leads to a bisection of the perforation costs and to savings at the materials costs (perforated carrier does not have to be discarded and disposed).

If the adhesive layer 20 is missing in an adhesion compound that with respect to the other features is as described before, then the poster material as well as the carrier material (if non-adhesive) may be processed to a poster according to the present invention with the above mentioned advantages. Compound materials that are separable and after separation are non-tacky and do not adhere to any surface by their own are known to the skilled person.

Specific poster materials suitable for being used in specific adhesion compounds of the present invention comprise poster materials selected from the group comprising materials provided with or containing light absorbingly coloured paper or light absorbingly coated paper, light absorbing, coloured plastic foils, synthetic foils provided with or containing a light absorbing coating, materials being or containing more than one layered compound fabric, particularly paper and synthetic fabric, a compound fabric made of various synthetic fabrics, a compound made of paper and/or synthetic fabric and one or more further materials, pulp fabrics, especially an open work fabric made of textile- and/or synthetic fibres.

Specific carrier materials suitable for being used in specific adhesion compounds of the present invention comprise carrier materials selected from the group consisting of materials provided with or containing light absorbingly coloured paper or light absorbingly coated paper, light absorbing, coloured plastic foils, synthetic foils provided with or containing a light absorbing coating, materials being or containing more than one layered compound fabrics, particularly paper and synthetic fabric, compound fabrics made of various synthetic fabrics, compounds made of paper and/or synthetic fabric and one or more further materials.

One possibility to provide the adhesion compound with holes 50, i.e. to make it holey, is by a perforation that during the production is performed through the whole adhesion compound and - in direction perpendicular to the direction of the perforation - in at least specific areas and preferably over the whole adhesion compound. Such a perforated adhesion compound is also an inventive adhesion compound. In a further production step, such an adhesion compound may be disconnected and the perforated material may be applied on a new, continuous (i.e. not holey) carrier material for simple printing and/or for protecting the light absorbing surface against pollution.

In another adhesion compound intermediate of or for use in the present invention, the carrier material has no holes. This is e.g. the case in an adhesion compound intermediate prior to perforation or punching, respectively, or in an adhesion compound wherein after perforation or punching the perforated/punched carrier has been replaced by a protective carrier for protecting the light absorbing surface during the poster production steps during which the first side is provided with a light reflecting surface and/or an information such as an image and/or a text.

At a later stage of the production method, the first, light reflecting surface 3 of the poster material will be provided with information 30, particularly with an image and/or text. Such an adhesion compound carrying information is also an object of the present invention.

If the carrier shall not be disposed of, the first side of the carrier material of an inventive adhesion compound can have a surface 5 which is printable or which features an image receptive coating. The surface 5 of the first side of the carrier material of such an adhesion compound can then be printed on with information 30. Since such information provided continuous carrier has no holes, for see-through applications it should be at least partially transparent. If not transparent, preferred applications are on opaque surfaces.

As already shortly addressed above, the surface 3 of the first side and/or the surface 4 of the second side of the poster material and/or the surface 5 of the fist side and/or the surface 6 of the second side of the carrier material may be light absorbing and/or light reflecting, respectively, e.g. due to at least one layer applied to the respective side having the required light absorbing or light reflecting properties.

In another embodiment, the surface 3 of the first side and/or the surface 4 of the second side of the poster material and/or the surface 5 of the first side and/or the surface 6 of the second side of the carrier material of an inventive adhesion compound are light absorbing and/or light reflecting due to dyeing of the poster substrate 1 and/or of the carrier substrate 2.

In another embodiment of the adhesion compound the poster substrate 1 and/or the carrier substrate 2 are a compound material, particularly a laminate. This or these compound material(s) can be selected such that they provide:at least one of the light reflecting or light absorbing surfaces, preferably both.

It is also possible to mix two or three of the above described possibilities, e.g. to provide one or more of the light absorbing or light reflecting surfaces by coating, others by dyeing and/or using compound material (s).

In preferred embodiments of the inventive adhesion compound, the light reflecting surface 3 of the first side of the poster material and/or the light reflecting surface 5 of the first side of the carrier material appear white or metallized, and the light absorbing surface 4 of the second side of the poster material and/or the light absorbing surface 6 of the second side of the carrier material appear black. Preferred metallized appearing surfaces have such appearance due to an aluminum layer.

A very regular allocation of the material-free areas 50, the holes, is primarily essential in order to obtain on the one hand a good through sight and on the other hand a good visibility of the information, e.g. a clear picture. A very good combination of the two competing demands is obtained when the regularly allocated material-containing and material-free areas of the poster material, and optionally the carrier material, are such that the material-free areas have a diameter of 1 to 5 mm, in particular 1 to 2 mm, and the material-containing areas provide 30 to 60 %, in particular 30 to 50 % of the poster area whereby the sum of the material-free and the material-containing areas is 100 %.

The material-free areas 50, the holes, preferably are round, and much preferred identical. Such holes advantageously are perforation holes 50, punching holes 50.

In general, the sum of all areas with holes 50, e.g. the perforated area, is at least 50 % of the total area of the adhesion compound or the poster material or poster, respectively, preferably at least 75 %, more preferably at least 90 %, and especially preferred about 100 %, i.e. preferably the whole poster material/poster is see-through due to holes 50, possibly except a small area ("frame") adjacent the edges.

In a preferred embodiment, the poster material and/or the carrier material comprise at least one auxiliary layer/coating, in particular a translucent separation/release layer 23 and/or a protective layer 34 on the second side of the poster material, and/or an auxiliary layer which improves the printability on the first side of the poster material and/or the carrier material.

Also a subject of the present invention is a non-adhesive/non-adherent poster material as described above that is provided with regularly allocated (distributed) holes 50 and that on the first side has a printable surface 3 or a surface 3 that may be provided with a printable layer/coating and that on the second side has a light absorbing surface 4, and whereby the poster material has neither on the first side 3 nor on the second side 4 an adhesive layer 20, in particular a poster material that on the first side 3 is light reflecting. It is especially favored when the poster material has already been made printable on the first side 3.

On the light reflecting first side 3, the poster material may carry information and is then generally referred to as a poster.

While with special printing machines it is possible to directly print on a holey poster material, e.g. by sucking excessive color off the light absorbing side or by feeding the poster material to the printing facility simultaneously with and pressed on a protection material (e.g. a sucking paper or a soft plastic foil that due to its softness "seals" the holes), printing in an adhesion compound and subsequent disconnection is preferred. Such a method is further described below taking into consideration different alternatives.

An adhesion compound comprising a poster material and a carrier material, whereby the poster material and the carrier material are separably combined with each other and whereby the poster material has on a first side a printable or with an image receptive layer 24 directly or after pre-treatment providable surface 3 and on the second side a light absorbing surface 4, is perforated, in particular by dye cutting. This adhesion compound will then be disconnected and, depending on its actual equipment, the carrier material will either be discarded or be further processed as a poster material of the state of the art in a respective adhesion compound.

The inventive poster material obtained as described above preferably is applied to a continuous (not-holey) carrier with its second, light absorbing side 4. Said continuous carrier possesses an adhesive layer 20 that preferably is totally residue free releasable from the poster material, i.e. the adhesive layer 20 totally remains on the carrier material. Said adhesion compound then is subjected to coating steps/printing steps wherein - depending on the requirements - not yet existent layers such as e.g. adhesion improving (primer) layers and/or a light reflecting printing or coating and/or an image receptive layer 24 and/or a print of information and/or a protective layer are applied.

Alternatively it is also possible to perforate poster material alone, i.e. without carrier material, and to apply such material directly on a continuous, not perforated carrier for further processing, or to use appropriate holey fibrous material 16 as poster material in this step.

In a further embodiment, the carrier material of the adhesion compound of the present invention is a carrier substrate 1 that is sticky on both sides, whereby in this case both sides of such a carrier material are covered with poster material, in particular holes 50 containing poster material. Dependent on the production step, also the carrier material can have holes. Such compound can be further processed similar to a compound comprising one poster material on a one side adhesive carrier material, e.g. in that successively first the one and then the other side are printed, or by simultaneously printing both sides in appropriately equipped facilities. Such "sandwich" type adhesion compound with continuous poster material can also be used in the perforation step.

In a preferred embodiment, the inventive adhesion compound that has already been provided with information 30 over said information has at least one additional layer, especially one or more protection layer(s) 34 selected from the group comprising layers for improving the abrasion resistance, layers for enhancing the light fastness, layers for enhancing the weather fastness, layers for protection against graffiti, and two or more layers of the same or different kind.

After application of the information 30 and optionally a protective layer/coating 34, the poster may be separated from the carrier. Since bigger amounts of carrier material accumulate during production (provided that it is not intended for being used as adhesive poster), it can relatively easy be collected and re-used or recycled. In the embodiment with a both sides adhesive coated carrier material sandwiched between two poster materials, the carrier material usually is disposed of, since such material, if perforated, is not suitable for being used in the information printing step or as adhesive poster and if not perforated, it might be polluted during information printing such that it could only be re-used to a limited extent, or it could be delivered to the end user with the posters on it, if e.g. the simultaneous use of the posters of both sides were intended.

It has to be understood that an adhesion compound of the present invention is always such that neither the surface 3 of the poster material intended for printing nor the opposite surface 3,5 of the carrier material are sticky. This means that either the carrier material has only an adhesive layer 20 on one surface, or - in the case of two adhesive layers 20, 20' - the carrier material is sandwiched between two poster materials with non sticky sides intended for information print directed away from said carrier.

Also an object of the present invention is a poster material as defined above that has regularly arranged holes 50 and a printable surface 3 on the first side and a light absorbing surface 4 on the second side, said poster material having an adhesion layer 20 neither on the first side nor on the second side, nor any adhesive properties at all.

The poster material of the present invention preferably already has a light reflecting first side. In a less preferred embodiment light reflecting properties are subsequently applied, e.g. during the information providing step. In the scope of the present invention, a poster material provided with information 30 on the first side, alternatively is also termed poster.

The presently most preferred adhesion compound consists of perforated poster material with a light reflecting, in particular white first side and a light absorbing, in particular black second side, a continuous carrier material and an adhesive layer 20 between said second side of said poster material and said carrier material, whereby said adhesive layer upon separating said poster material remains on said carrier material.

Such adhesion compound can easily be printed by common printing equipment and separated from the carrier/liner material already at the printing site such that the carrier/liner material can easily be collected in large quantities for correct disposal, re-use or recycling.

A poster of the present invention can be produced in that a printable adhesion compound
comprising at least a poster material with a poster substrate 1 and a carrier material with a carrier substrate 2, said poster material and said carrier material being separably joined together by an adhesive layer 20, said poster material having on a first side a printable surface that is light reflecting and on a second side a light absorbing surface, said poster material furthermore comprising holes 50 at least in one area such that after separation from said carrier material it is one-sided see-through and does not comprise any adhesive layer 20,
is printed with information 30 on said first side of said poster material and optionally on said first side of said carrier material, and in that optionally a protection layer 34 is applied to the printed surface of said poster material and optionally to said optionally printed surface of said carrier material, and in that finally said poster material is separated from said carrier material.

Since a non adhesive poster shall be produced, also the poster substrate 1 and the poster material are non adhesive.

A printable adhesion compound can be produced in that a poster material that is one-sided see-through in at least one area and that has on a first side a printable surface 3 or a surface 3 that can be directly provided with an image receptive layer/coating 24 or a surface 3 that after pre-treatment can be provided with such coating and that has on a second side a light absorbing surface 4, is separably stuck to a hole-free (non-perforated, continuous) carrier material by means of an adhesive layer 20. If the first side is not per se printable, it is provided with an image receptive layer/coating 24, and if it is not yet light reflecting, it is directly or after application of an image receptive layer 24 provided with a light reflecting coating or layer.

In the method of the present invention, the poster material that is one-sided see-through in at least one area is produced in that poster material comprising on a first side a printable surface 3, and on a second side a light absorbing surface 4, is provided with holes 50 in at least one area by perforation. Alternatively to a poster material with printable surface 3, a poster material with a surface 3 directly provided with an image receptive layer/coating 24, or with a surface that after pre-treatment is provided with such layer/coating 24 can be applied.

The poster material being one-sided see-through in at least one area can be produced by using a starting or base adhesion compound comprising at least a poster material with a poster substrate 1 and a carrier material with a carrier substrate 2, said poster material and said carrier material being separably connected to each other by an adhesive layer 20 such that after separation from said carrier material said poster material shows no adhesive layer 20, said poster material having on a first side a printable surface 3 and on a second side a light absorbing surface 4, said starting or base adhesion compound being provided with holes 50 in at least one area by means of a perforation that goes through the complete starting or base adhesion compound, the such generated adhesion compound then being separated to give a perforated poster material and a perforated adhesive carrier material. Alternatively to the poster material with a printable surface 3, a poster material with a surface 3 that is directly provided with an image receptive layer 24 or a surface that after pre-treatment can be provided with such layer 24 are suitable.

The method of the present invention also may comprise the steps that the base adhesion compound is made by providing a hole-free poster substrate with a light absorbing layer/coating 32 on its second side and optionally with a printable coating or an image receptive coating/layer 24 on its first side, and that the poster material is separably connected with a carrier material, whereby after separation from said carrier material said poster material does not comprise any adhesive layer.

A method for producing an alternative base adhesion compound comprises separably connecting a hole-free poster substrate to a carrier material, wherein the poster material is produced in that a laminate of a light absorbing layer 32 and a printable layer or a layer that is directly or after pre-treatment providable with an image receptive coating 24 is produced, and wherein after separation from the carrier material the poster material does not have any adhesive layer 20.

In a preferred method, the carrier material used has on a first side a printable coating or a surface 5 that is directly or after pre-treatment provided with an image receptive coating 24 and on a second side a light absorbing surface 6. The method of the present invention may also comprise further steps during which the first side of the carrier material is provided with a printable coating or, optionally after pre-treatment, with an image receptive coating 24 and on a second side with a light absorbing surface 6.

The carrier material used in the inventive method may be provided with an adhesion coating 20 on the light absorbing surface 6 of its second side.

The poster material and optionally the carrier material may in any step of the method for the production of a printable adhesion compound be provided with an image receptive layer/coating 24 and/or a light reflecting surface and/or at least one auxiliary layer/coating, provided that such layer/coating does not affect the further use of the compound (e.g. an auxiliary layer/coating that improves abrasion resistance, or protects against graffity but is not well printable should not be applied in an early step but only after information printing).

A preferred method of the present invention is a material and cost saving method using specific adhesion compounds having in at least some steps a carrier material that has not to be discharged but that can be used in other applications, e.g. a perforated carrier as a poster material for one-side see-through adhesive posters, non perforated carriers as adhesive posters for use on opaque surfaces.

A poster produced as described above that is printed on one side and that can be seen through from the other side can be hung-up or put-up (erected) in a room or shop-window in various ways, e.g. stabilized - if need be, i.e. in case that the material itself is not sufficiently dimensionally stable- by a frame that does not impact the visibility and transparency, in particular by a clip-on picture frame, or leaned against - but not adhered to - a glass pane/window, or hung in a room without any additional stabilization.

Specific embodiments of the present invention will be further explained below by means of the Figures. These Figures merely represent examples of embodiments and shall not be construed as in any way limiting the invention described in the appended claims.

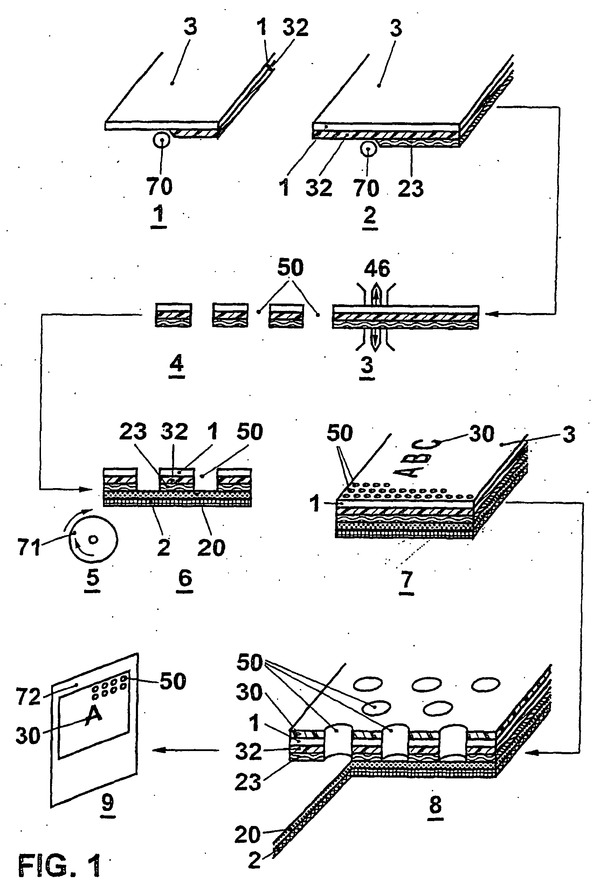

FIG. 1 shows in 9 steps a method for the production of a poster starting from a poster material that is perforated without a carrier.

Step 1 shows the application by means of a roller 70 of a light absorbing, in particular a black, coating 32 on a poster substrate 1. The application of such a coating 32 may be achieved through e.g. coating with fluid material or by laminating with an appropriate foil. The first side or surface 3 of the poster substrate 1 is suitable for the application of an image and/or other information 30 by means of printing methods. The result of this first step is a poster material as described above. Step 2 shows the poster material made in step 1 at the application of an auxiliary layer, in this case a separating layer 23, on the light absorbing layer 32. The separating layer has to be such that the respectively coated surface 4 of the poster material is still light absorbing. The separating layer thus is preferably also a light absorbing layer 32 or a colorless, transparent layer. This coating can also be applied as a fluid (liquid) or as a foil whereby the application of the layer as a fluid (liquid) is preferred. Step 3 shows the perforation step whereby the perforating tool 46 is shown during the break-through of the poster material 1, 32, 23. The arrows indicate the direction of the perforation and the movement of the tool 46. Step 4 is a cross section representation of the poster material provided with holes 50 after the punching step. Step 5 shows a roller 71 with which an adhesive 20 and a carrier substrate 2, whereby here the carrier substrate 2 is identical with the carrier material, or an adhesive 20 coated carrier material, are applied to the poster material, and step 6 shows the resulting adhesion compound. The application of information 30 by means of printing methods takes place between the steps 6 and 7, and the perforated and printed adhesion compound is shown in step 7. Step 8 shows the disconnection of the adhesion compound and step 9 shows the final product, applied to a window pane 72.

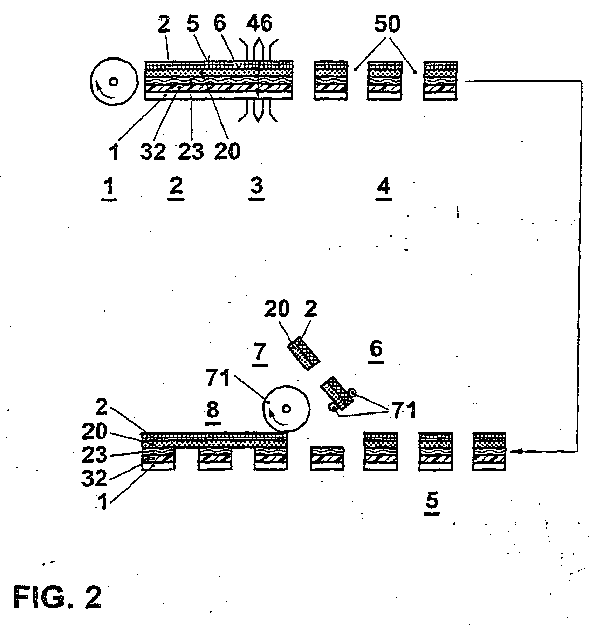

FIG. 2 shows different steps of the inventive method starting from an adhesion compound that prior to perforation has been provided with a carrier material.

Step 1 schematically illustrates a roll of adhesion compound having the construction described in step 2 in cross section. This base adhesion compound consists of (from top to bottom) a carrier substrate/carrier material 2, an adhesive layer 20 and a poster material made of a separating layer 23, a black layer 32 and a poster substrate 1. Preferably the carrier material has a printable surface 5 that is turned away from the adhesion coating 20 and a light absorbing surface 6 that is turned towards the adhesive layer 20. In step 3 the die-cutting of the adhesion compound by means of the tool 46 is shown and in the steps 4 and 5 the completely perforated adhesion compound is illustrated. The steps 6 and 7 show the disconnection of the perforated adhesion compound and the application of the perforated poster material on a new, not perforated carrier material by means of adhesive layer 20 and with application of a transport roller 71 whereby a new adhesion compound is generated.

FIG. 3A shows a cross section through a poster substrate 1 that has been provided with a light absorbing coating 32 in FIG. 3B. FIG. 3C shows the material of FIG. 3B with an additional separating layer 23, e.g. a silicone layer. Such layer is only necessary if the adhesion of the adhesive on the carrier material is not sufficiently stronger than on the poster material or if an undesired (e.g. irregular) cohesive fracture would occur. FIG. 3D shows the material of FIG. 3C after application of holes and FIG. 3E shows how the poster material of FIG. 3C is stuck together with an adhesive layer 20 coated carrier such forming an adhesion compound wherein the separating layer 23 separably adheres to the adhesive layer 20. The adhesion between the separating layer 23 and the adhesive layer 20 is preferably adjusted such that the adhesion is just sufficient to survive the intended further steps of the method without any problems, in particular the printing of an information 30 and - if necessary - previously the application of an image receptive layer 24. FIG. 3F finally shows the material produced according to FIG. 3E.

FIG. 4 shows the adhesion compound of FIG. 3F, wherein the surface 3 of the poster substrate 1 is not sufficiently well printable and therefore has to be prepared for the printing of information by applying an image receptive coating 24, after application of said image receptive coating 24 and said information 30.

FIG. 5 shows the material of FIG. 3F, wherein the surface 3 of the poster substrate 1 is directly suitable for the printing of information, after the application of information 30.

FIG. 6 shows a cross section through the material of FIG. 5 during separation of the finished poster from a self adhesive carrier 2,20. Provided that the self adhesive carrier 2,20 is not too badly soiled, it can be re-used again as a carrier. Alternatively, and not shown in the Figure, such a carrier can (provided that it is printably featured on the not adhesive coated side or surface 5), be provided with an information printing 21 (not shown here) either at a stage where it is still in the above described adhesion compound, or at a later stage joined to a liner. Such a printed carrier can be used as a common transfer image.

FIG. 7 schematically shows the step of attaching a poster onto a glass pane 72. The poster consists of a poster material comprising a light absorbing layer 32, a poster substrate 1 as well as an image receptive layer 24 and an information layer 30.

FIG. 8 shows a cross section through a poster analogous to the peeled off poster in FIG. 6 with an additional layer applied over picture 30, a protection layer 34. Here, the protection layer was applied in liquid form wherefore the holes 50 have also been formed. In this embodiment, it is not a must that the protection layer 34 is fully transparent and colorless but it may optionally contain a special effects generating filler that only mildly decreases transparency.

FIG. 9 shows a similar embodiment as FIG. 8 wherein the protection layer 34 applied is a continuous protection film, in particular a transparent, at least mostly colorless lamination foil.

FIG. 10A shows a materials saving variant of an inventive adhesion compound as it might be delivered to the end user. In this embodiment, by using a carrier material that is on both sides coated with adhesive 20, 20', two posters, either formed by a separating layer 23, a light absorbing poster substrate 1, and an information printing 30 on a white base coat, or formed by a poster substrate 1 being a laminate made of a light absorbing foil and a light reflecting foil, whereby the information 30 has been directly applied on the surface 3 of the light reflecting foil, can simultaneously be provided. This is e.g. reasonable if the information of the two posters is interrelated such that it has to be ensured that always the desired set is delivered to the end user, or if a carrier is desired to enhance the stability during transport. A respective sandwich that has not yet been provided with information 30 is also advantageous for the use in printing equipment suitable for more or less simultaneous front and back side printing, and thus for shipping from the adhesion compound manufacturing site to the printing facilities.

FIG. 10B shows the material of FIG. 10A during detachment of one of the posters and FIG. 10C shows the material of FIG. 10B after complete separation of the first poster and started detachment of the second poster. If the posters neither have interrelated information nor need stabilization during transport, they can be removed from the carrier already at the production site thereby improving the collecting and recycling of the carrier material.

An adhesion compound formed from a double sided sticking carrier material and two poster materials can also be used in the perforation step, if simultaneously, i.e. in one punching step, two inventive poster materials shall be perforated.

FIG. 11 shows a material of the state of the art for manufacturing of an adhesively bonding, one-sided see-through poster with a substrate 2 having a light reflecting, printable surface 5 and a light absorbing surface 6, and which comprises a usual removable carrier 29 instead of the poster material relevant according to the present invention.

FIGURES 12A-12D show for a sticky material, like the one shown in FIG. 11, an improvement achieved by the present invention. By not anymore using a common liner for covering the adhesive layer 20, but a poster material according to the present invention with a light absorbing layer 32 on the side 4 of the poster substrate 1 being oriented towards the adhesive layer (FIG. 12A), the complex perforation procedure can be carried out simultaneously for two poster materials, for a poster material comprising a layer of adhesive material(in the scope of the present invention, such adhesive poster material is in general referred to as carrier material), which will be processed further to a sticky poster as known from the state of the art, and for an inventive poster material that is free of an adhesive layer (FIG. 12B).

FIG. 12C shows the separation of a poster material provided with an adhesive layer from a poster material free of an adhesive layer. Alternatively, the procedure of FIG. 12A to FIG. 12C might also be applied for simultaneously manufacturing two inventive, punched non-adherent poster materials, namely when, e.g. a separable compound material free of any adhesive layer were used. Such materials comprise co-extrusion products and welded products.

In a further process step of the present invention, an adhesive coated, not perforated carrier is applied onto the adhesive free poster material (FIG. 12D). This step is only necessary or desirable when the printing apparatus construction does not provide any means by which a pollution of the light absorbing side during the printing procedure can at least be reduced and preferable completely avoided. Such means are e.g. a sucking (exhaust) device, or the simultaneous supply of a covering foil that can be pressed onto the poster material, or a roll provided with an adequate surface. If the material is adequately chosen, not only the surface 3 of the poster material can subsequently be printed with information 30, but also the surface 5 of the carrier material with information 21.

FIGURES 13A-13D show an analogous material, whereby in this embodiment the poster material does not need to be perforated, since it is a loose, and thus already "holes" comprising, light permeable fibrous material 16, 16A, e.g. a fabric. This fibrous material 16, 16A is one-sided light absorbingly coated (FIG. 13A) such that the regular, light permeable structure of the fibrous material 16, 16A is not affected. For easy processing in various printing apparatuses, this one sided light absorbingly coated fibrous material 16, 16A is then bonded with its light absorbing side 4 onto a self adhesive, separable foil 2, 20 (FIG. 13B). This foil, the carrier, shall be at least as elastic and as soft, that upon application of a certain pressure it is nestled to the light absorbing side 4 of the fibrous material such that said light absorbing side 4 is not soiled during the printing procedure.

FIG. 13C shows a preferred embodiment, wherein not only the fibrous material 16, 16A comprises information 30 but also the carrier material 2, 20, 5 is provided with information 21. As already more than once described above, after having been printed with information 30, the carrier material 2, 20, 5 can be peeled off the inventive poster 32, 16, 30 and its adhesive layer can be covered with a foil comprising a separation/release layer (FIG. 13D).

In a further embodiment of the present invention and analogous to the above description also an "open work" poster material can be manufactured whose light reflecting side 3 is provided with a metallization which does not need to be printable. Such a material, for example, is adequate to be used as a reflective covering of glass panes, e.g. of winter gardens.

While there are shown and described presently preferred embodiments of the invention, it is to be distinctly understood that the invention is not limited thereto but may be otherwise variously embodied and practised within the scope of the following claims.

## Claims

1. An adhesion compound suitable for use in the production of non-adhesive posters, said adhesion compound comprising at least a poster material with a poster substrate (1) and a carrier material with a carrier substrate (2), wherein said poster material and said carrier material are separably connected together by an adhesive layer (20), and wherein said poster material has on a first side a printable or with an image receptive coating directly or after pre-treatment providable surface (3) and on a second side a light absorbing surface (4), and wherein said adhesive layer (20) has a better adhesion towards said carrier material than towards said poster material such that after separation of said poster material and said carrier material said adhesive layer (20) remains on said carrier material, and wherein said poster material has in at least an area holes (50) that are regularly or in a regular pattern distributed, such that in separated form it is see-through from said second side with said light absorbing surface (4).

2. The adhesion compound of claim 1, wherein the side of said poster material facing said carrier material is the second side with the light absorbing surface (4).

3. The adhesion compound of claim 1 or 2, wherein on said fist side said poster material has a printable surface (3) .

4. The adhesion compound of claim 1 or 2, wherein said poster material has a first side with a surface (3) that is directly or after pre-treatment providable with an image receptive layer/coating (24).

5. The adhesion compound of anyone of the preceding claims, wherein said surface (3) of said first side of said poster material is light reflective.

6. The adhesion compound of anyone of the preceding claims, wherein said carrier material has a. first side with a surface (5) which is printable or with an image receptive layer/coating (24) directly or after pre-treatment providable, and a second side with a surface (6) which is light absorbing, whereby said light absorbing second side of said carrier material faces said poster material.

7. The adhesion compound of claim 6, wherein said first side of said carrier material has a surface (5) which is light reflecting.

8. The adhesion compound of anyone of the preceding claims, wherein said poster material and said carrier material in at least one area have regularly distributed holes (50).

9. The adhesion compound of anyone of the preceding claims, wherein said holes (50) are perforation or punching holes (50), respectively.

10. The adhesion compound of anyone of claims 1 to 7, wherein said carrier material has no holes (50).

11. The adhesion compound of claim 10, wherein said first side of said poster material is provided with information (30), especially an image and/or a text.

12. The adhesion compound of anyone of the preceding claims, wherein said first side of said carrier material has a surface (5) which is printable per se or due to an image receptive coating.

13. The adhesion compound of anyone of the preceding claims, wherein said surface (5) of said first side of said carrier material is printed on with information.

14. The adhesion compound of anyone of the preceding claims, wherein said surface (3, 4) of said first and/or said second side of said poster material and/or said surface (5, 6) of said fist and/or said second side of said carrier material are light absorbing and/or light reflecting due to a layer applied to the respective side, or to dyeing of said poster substrate (1) or of said carrier substrate (2).

15. The adhesion compound of anyone of the preceding claims, wherein said poster substrate (1) and/or said carrier substrate (2) are compound materials, in particular laminates.

16. The adhesion compound of anyone of the preceding claims, wherein said first side of said poster material and/or said first side of said carrier material have a surface (3, 5), which is white or appears metalised, in particular aluminised, and/or that said light absorbing surface (4, 6) of said second side of said poster material and/or said carrier material appears black.

17. The adhesion compound of anyone of the preceding claims, wherein at least one area of said poster material and possibly of said carrier material is provided with regularly distributed holes (50), such that said holes (50) have a diameter of 1 to 5 mm, preferably 1 to 2 mm, and that said holes (50) amount to 30 to 60%, preferably 30 to 50% of all the areas with regularly distributed holes (50), in particular circular/round holes (50).

18. The adhesion compound of anyone of the preceding claims, wherein said poster material and/or said carrier material comprise light absorbingly coloured paper or with a light absorbing layer (32) coated paper or that said poster material comprises a light absorbingly coloured plastic foil or a plastic foil that is coated with a light absorbing layer (32), or that said poster material and/or said carrier material comprise a multilayer compound material, in particular paper and plastics(synthetic material(s)), or a compound material made of several plastics, or a compound made of paper and/or plastics and one or more further materials, or said poster material comprises a pulp fabric, especially an open work fabric made of textile fibres and/or synthetic fibres.

19. The adhesion compound of anyone of the preceding claims, wherein said poster material and/or said carrier material are provided with at least one auxiliary layer, in particular a translucent/transparent separation/release layer (23) and/or protection layer on said second side of said poster material or an auxiliary layer which improves the printability on said first side of said poster material and/or said carrier material.

20. The adhesion compound of anyone of the preceding claims, wherein said adhesion compound is provided with information and with at least one additional layer over said information, in particular one or more protective layers (34) for the degradation of abrasion, for the enhancement of the light fastness/light resistance, for the enhancement of the weather resistance, and/or for the protection from graffiti.

21. The adhesion compound of anyone of the preceding claims, wherein said carrier material is on both sides provided with an adhesive layer (20, 20'), said carrier material being on both sides provided with poster material, preferably with poster material having holes (50).

22. The adhesion compound of anyone of claims 1 to 20, wherein said carrier material is only on one side in contact or provided with an adhesive layer (20).

23. The adhesion compound of anyone of the preceding claims, wherein the sum of all areas having holes (50) of said poster material, and optionally said sum of all areas having holes (50) of said carrier material is at least 50 % of the total area of said adhesion compound or said poster material, respectively, preferably at least 75 %, particularly at least 90 %, especially preferred about 100 %, and much preferred the sum of all areas having holes (50) of said carrier material is 0 % or identical to the sum of all areas having holes (50) of said poster material.

24. A method for the production of a one-sided see-through non adhesive poster using an adhesion compound of anyone of the preceding claims, wherein
a printable adhesion compound comprising at least a poster material with a poster substrate (1) and a carrier material with a carrier substrate (2), said poster material and said carrier material being separably joined together by means of an adhesive layer (20), said poster material having on a first side a printable surface (3) that is light reflecting and on a second side a light absorbing surface (4), said poster material being provided with holes (50) in at least one area such that it is one-sided see-through, said poster material after separation from said carrier material being free from any adhesive layer (20),
is printed with information on said first side of said poster material and optionally on said first side of said carrier material, said first side of said poster material and/or said first side of said carrier material is optionally provided with a protection layer over said information (30), and then said poster material is separated from said carrier material.

25. A method for the production of a printable adhesion compound, wherein poster material having on a first side a printable or with an image receptive coating (24) directly or after pre-treatment providable surface (3), and on a second side a light absorbing surface (4), and in at least an area holes (50) that are regularly or in a regular pattern distributed, such that in separated form it is see-through from said second side with the light absorbing surface (4) is removably adhered/bonded to a non-holey carrier material by means of an adhesive layer (20) and optionally provided with an image receptive coating (24) and/or a light reflecting coating, said adhesive layer (20) having a better adhesion towards said carrier material than towards said poster material such that after separation of said poster material and said carrier material said adhesive layer (20) remains on said carrier material.

26. The method of claim 24 or 25, wherein the poster material that is one-sided see-through in at least one area is produced in that a poster material comprising on a first side a printable surface (3) or a surface (3) that can directly or after pre-treatment be provided with an image receptive coating (24) and that on a second side has a light absorbing surface (4) is provided with holes (50) in at least one area by perforation.

27. The method of claim 24 or 25, wherein said poster material that is one-sided see-through in at least one area is produced in that a base adhesion compound comprising at least a poster material with a poster substrate (1) and a carrier material with a carrier substrate (2), wherein said poster material and said carrier material are separably connected/joined together by an adhesive layer (20), and wherein said poster material has on a first side a printable or with an image receptive coating directly or after pre-treatment providable surface (3) and on a second side a light absorbing surface (4), and wherein said adhesive layer (20) has a better adhesion towards said carrier material than towards said poster material such that after separation of said poster material and said carrier material said adhesive layer (20) remains on said carrier material, in at least one area is provided with holes (50) by means of perforation, said holes (50) going through the whole adhesion compound, and then said poster material and said carrier material are separated.

28. The method of claim 27, wherein said base adhesion compound is produced in that a not holey poster material/substrate (1) with a printable surface (3) or a surface (3) that is directly or after pre-treatment providable with an image receptive layer (24) on its first side and with a light absorbing surface (4) on its second side is made by either applying a light absorbing coating to the surface of said second side of said poster substrate (1), said poster substrate (1) providing the first surface (3), or by producing a laminate of a light absorbing layer (32)and a printable layer or a layer that is directly or after pre-treatment providable with an image receptive layer (24), the such produced poster material then being connected/joined with a carrier material such that after separation from said carrier material, said poster material does not have any adhesive properties.

29. The method of anyone of claims 24 to 28, wherein said carrier material used on a first side has a printable surface (5) or a surface (5) that is directly or after pre-treatment providable with an image receptive layer (24) and that on a second side has a light absorbing surface (6), and wherein said carrier material on said second side with said light absorbing surface (6) has an adhesive layer (20).

30. The method of anyone of claims 24 to 29, wherein said poster material and optionally said carrier material is provided with an image receptive layer (24) and/or a light reflecting surface (3, 5) and/or at least one auxiliary coating in any step of the production process of the printable adhesion compound.

31. Use of an adhesion compound of anyone of claims 1 to 23 in the production of a one-side see-through non-adhesive poster.

## Revendications

1. Composite d'adhérence convenant à une utilisation dans la production d'affiches non adhésives, le composite d'adhérence comprenant au moins un matériau pour affiche, avec un substrat pour affiche (1) et un matériau support comportant un substrat support (2), le matériau pour affiche et le matériau support étant assemblés séparément l'un à l'autre par une couche adhésive (20), et le matériau pour affiche ayant sur une première face une surface (3) imprimable, ou pouvant recevoir, directement ou après un prétraitement, un revêtement récepteur d' image, et sur une deuxième face une surface (4) absorbant la lumière, et la couche adhésive (20) présentant vis-à-vis du matériau support une adhérence meilleure que vis-à-vis du matériau pour affiche, de telle sorte que, après séparation du matériau pour affiche et du matériau support, la couche adhésive (20) reste sur le matériau support, et le matériau pour affiche ayant, dans au moins une zone, des trous qui sont distribués d'une manière régulière ou selon un motif régulier de telle sorte que, sous forme séparée, il soit transparent à partir de la deuxième face portant la surface (4) absorbant la lumière.

2. Composite d'adhérence selon la revendication 1, dans lequel la face du matériau pour affiche en regard du matériau support est la deuxième face comportant la surface (4) absorbant la lumière.

3. Composite d'adhérence selon la revendication 1 ou 2, dans lequel, sur la première face, le matériau pour affiche possède une surface imprimable (3).

4. Composite d'adhérence selon la revendication 1 ou 2, dans lequel le matériau pour affiche possède une première face comportant une surface (3), qui peut recevoir directement, ou après prétraitement, une couche/un revêtement (24) récepteur d'image.

5. Composite d'adhérence selon l'une quelconque des revendications précédentes, dans lequel la surface (3) de la première face du matériau pour affiche réfléchit la lumière.

6. Composite d'adhérence selon l'une quelconque des revendications précédentes, dans lequel le matériau support possède une première face comportant une surface (5) qui est imprimable ou peut recevoir directement ou après prétraitement une couche/un revêtement (24) récepteur d'image, et une deuxième face comportant une surface (6) qui absorbe la lumière, la deuxième face absorbant la lumière du matériau support étant en regard du matériau pour affiche.

7. Composite d'adhérence selon la revendication 6, dans lequel la première face du matériau support possède une surface (5) qui réfléchit la lumière.

8. Composite d'adhérence selon l'une quelconque des revendications précédentes, dans lequel le matériau pour affiche et le matériau support dans au moins une zone ont des trous (50) régulièrement distribués.

9. Composite d'adhérence selon l'une quelconque des revendications précédentes, dans lequel les trous (50) sont des perforations ou des trous poinçonnés (50).

10. Composite d'adhérence selon l'une quelconque des revendications 1 à 7, dans lequel le matériau support n'a pas de trous (50).

11. Composite d'adhérence selon la revendication 10, dans lequel la première face du matériau pour affiche reçoit des informations (30), en particulier une image et/ou un texte.

12. Composite d'adhérence selon l'une quelconque des revendications précédentes, dans lequel la première face du matériau support possède une surface (5) qui est imprimable en l'état, ou en conséquence d'un revêtement récepteur d'image.

13. Composite d'adhérence selon l'une quelconque des revendications précédentes, dans lequel la surface (5) de la première face du matériau support comporte des informations imprimées.

14. Composite d'adhérence selon l'une quelconque des revendications précédentes, dans lequel la surface (3,4) de la première et/ou de la deuxième faces du matériau pour affiche et/ou la surface (5, 6) de la première et/ou de la deuxième faces du matériau support absorbent la lumière et/ou réfléchissent la lumière en raison d'une couche appliquée sur la face correspondante, ou en conséquence d'une coloration du substrat (1) pour affiche ou du substrat support (2).

15. Composite d'adhérence selon l'une quelconque des revendications précédentes, dans lequel le substrat (1) pour affiche et/ou le substrat support (2) sont des matériaux composites, en particulier des stratifiés.

16. Composite d'adhérence selon l'une quelconque des revendications précédentes, dans lequel la première face du matériau pour affiche et/ou la première face du matériau support ont une surface (3, 5), qui est blanche ou apparaît métallisée, en particulier aluminée, et/ou la surface (4, 6) absorbant la lumière de la deuxième face du matériau pour affiche et/ou du matériau support apparaît noire.

17. Composite d'adhérence selon l'une quelconque des revendications précédentes, dans lequel au moins une zone du matériau pour affiche et éventuellement du matériau support est pourvue de trous (50) régulièrement distribués, de telle sorte que lesdits trous (50) aient un diamètre de 1 à 5 mm et de préférence de 1 à 2 mm, et que l'aire desdits trous (50) soit de 30 à 60 % et de préférence de 30 à 50 % de la somme des aires des zones comportant des trous régulièrement distribués (50), en particulier des trous circulaires/ronds (50).

18. Composite d'adhérence selon l'une quelconque des revendications précédentes, dans lequel le matériau pour affiche et/ou le matériau support comprennent un papier coloré absorbant la lumière, ou un papier revêtu d'une couche (32) absorbant la lumière, ou encore le matériau pour affiche comprend une feuille plastique colorée absorbant la lumière ou une feuille plastique qui est revêtue d'une couche (32) absorbant la lumière, ou encore le matériau pour affiche et/ou le matériau support comprennent un matériau composite multicouche, en particulier un papier ou des plastiques (matériau (x) synthétique (s)), ou un matériau composite constitué de plusieurs matières plastiques, ou un composite constitué de papier et/ou de plastique et d'un ou plusieurs autres matériaux, ou encore le matériau pour affiche comprend un tissu à base de fibres de papier, en particulier un tissu ajouré fabriqué à partir de fibres textiles et/ou de fibres synthétiques.

19. Composite d'adhérence selon l'une quelconque des revendications précédentes, dans lequel le matériau pour affiche et/ou le matériau support sont pourvus d'au moins une couche auxiliaire, en particulier une couche de séparation/antiadhésive (23) translucide/transparente et/ou d'une couche de protection sur la deuxième face du matériau pour affiche, ou d'une couche auxiliaire qui améliore l'imprimabilité sur la première face du matériau pour affiche et/ou du matériau support.

20. Composite d'adhérence selon l'une quelconque des revendications précédentes, dans lequel le composite d'adhérence est pourvu d'informations, et d'au moins une couche additionnelle au-dessus desdites informations, en particulier une ou plusieurs couches protectrices (34) pour la dégradation de l'abrasion, pour améliorer la solidité/la résistance à la lumière, pour améliorer la résistance aux intempéries et/ou pour la protection contre les graffitis.

21. Composite d'adhérence selon l'une quelconque des revendications précédentes, dans lequel le matériau support est, sur ses deux faces, pourvu d'une couche adhésive (20, 20'), le matériau support étant, sur ses deux faces, pourvu d'un matériau pour affiche, de préférence d'un matériau pour affiche ayant des trous (50).

22. Composite d'adhérence selon l'une quelconque des revendications 1 à 20, dans lequel le matériau support est, seulement sur une face, en contact avec une couche adhésive (20), ou pourvu de cette dernière.

23. Composite d'adhérence selon l'une quelconque des revendications précédentes, dans lequel la somme des aires de toutes les zones comportant des trous (50) du matériau pour affiche, et éventuellement la somme des aires de toutes les zones ayant des trous (50) du matériau support sont d'au moins 50 % de l'aire totale du composite d'adhérence et du matériau pour affiche, de préférence d'au moins 75 %, en particulier d'au moins 90 %, d'une manière spécialement préférée d'environ 100 %, et tout spécialement la somme des aires de toutes les zones ayant des trous (50) du matériau support est de 0 %, ou est identique à la somme des aires de toutes les zones ayant des trous (50) du matériau pour affiche.

24. Procédé de production d'une affiche non adhésive, transparente sur une face, par utilisation d'un composite d'adhérence selon l'une quelconque des revendications précédentes, dans lequel
un composite d'adhérence imprimable comprenant au moins un matériau pour affiche comportant un substrat (1) pour affiche et un matériau support comportant un substrat support (2), le matériau pour affiche et le matériau support étant assemblés séparément l'un à l'autre au moyen d'une couche adhésive (20), le matériau pour affiche ayant sur une première face une surface imprimable (3) qui réfléchit la lumière et sur une deuxième face une surface (4) absorbant la lumière, le matériau pour affiche étant pourvu de trous (50) dans au moins une zone de telle sorte qu'il soit transparent sur une face, le matériau pour affiche, après séparation d'avec le matériau support, étant exempt d'une quelconque couche adhésive (20),
reçoit par impression des informations sur la première face du matériau pour affiche et éventuellement sur la première face du matériau support, la première face du matériau pour affiche et/ou la première face du matériau support étant éventuellement pourvues d'une couche protectrice au-dessus desdites informations (30), puis le matériau pour affiche est séparé du matériau support.

25. Procédé de production d'un composite d'adhérence imprimable, dans lequel un matériau pour affiche comportant sur sa première face une surface (3) imprimable, ou pouvant être pourvue, directement ou après prétraitement, d'un revêtement (24) récepteur d'image, et sur une deuxième face une surface (4) absorbant la lumière, et dans au moins une zone comportant des trous (50) qui sont distribués régulièrement ou selon un motif régulier de telle sorte que, sous la forme séparée, il soit transparent à partir de la deuxième face comportant la surface (4) absorbant la lumière, est collé/mis à adhérer d'une manière amovible à un matériau support non perforé, au moyen d'une couche adhésive (20), et est éventuellement pourvu d'un revêtement (24) récepteur d'image et/ou d'un revêtement réfléchissant la lumière, la couche adhésive (20) ayant vis-à-vis du matériau support une adhérence meilleure que vis-à-vis du matériau pour affiche, de telle sorte que, après séparation du matériau pour affiche et du matériau support, la couche adhésive (20) reste sur le matériau support.

26. Procédé selon la revendication 24 ou 25, dans lequel le matériau pour affiche, qui est transparent sur une face dans au moins une zone, est produit de telle sorte qu'un matériau pour affiche, comprenant sur une première face une surface imprimable (3) ou une surface (3) qui peut, directement ou après prétraitement, être pourvue d'un revêtement (24) récepteur d'image, et sur une deuxième face possède une surface (4) absorbant la lumière, soit pourvu de trous (50) dans au moins une zone, par perforation.

27. Procédé selon la revendication 24 ou 25, dans lequel le matériau pour affiche, qui est transparent sur une face dans au moins une zone, est produit de telle sorte qu'un composite d'adhérence de base, comprenant au moins un matériau pour affiche comportant un substrat (1) pour affiche et un matériau support comportant un substrat support (2), où le matériau pour affiche et le matériau support sont assemblés/réunis séparément l'un à l'autre par une couche adhésive (20), et où le matériau pour affiche possède sur une première face une surface (3) imprimable, ou pouvant, directement ou après prétraitement, être pourvue d'un revêtement récepteur d'image, et sur une deuxième face une surface (4) absorbant la lumière, et où la couche adhésive (20) présente vis-à-vis du matériau support une adhérence meilleure que vis-à-vis du matériau pour affiche, de telle sorte que, après séparation du matériau pour affiche et du matériau support, la couche adhésive (20) reste sur le matériau support, est dans au moins une zone pourvu de trous (50) au moyen d'une perforation, lesdits trous (50) traversant la totalité du composite d'adhérence, ce après quoi on sépare le matériau pour affiche et le matériau support.

28. Procédé selon la revendication 27, dans lequel le composite d'adhérence de base est produit par le fait qu'un matériau/substrat (1) pour affiche, non perforé, comportant une surface imprimable (3) ou une surface (3) qui, directement ou après prétraitement, peut être pourvue d'une couche (24) réceptrice d'image sur sa première face et d'une surface (4) absorbant la lumière sur sa deuxième face, est obtenu, soit par application d'un revêtement absorbant la lumière sur la surface de la deuxième face du substrat (1) pour affiche, le substrat (1) pour affiche fournissant la première surface (3), soit en produisant un stratifié d'une couche (32) absorbant la lumière et d'une couche imprimable ou d'une couche qui, directement ou après prétraitement, peut être pourvue d'une couche (24) réceptrice d'image, le matériau pour affiche ainsi produit étant ensuite assemblé/réuni à un matériau support de telle sorte que, après séparation d'avec le matériau support, le matériau pour affiche ne présente aucune propriété adhésive.

29. Procédé selon l'une quelconque des revendications 24 à 28, dans lequel le matériau support utilisé sur une première face possède une surface imprimable (5) ou une surface (5) qui, directement ou après prétraitement, peut être pourvue d'une couche (24) réceptrice d'image, et sur une deuxième face possède une surface (6) absorbant la lumière, et où le matériau support possède, sur la deuxième face comportant la surface (6) absorbant la lumière, une couche adhésive (20).

30. Procédé selon l'une quelconque des revendications 24 à 29, dans lequel le matériau pour affiche et éventuellement le matériau support sont pourvus d'une couche (24) réceptrice d'image et/ou d'une surface (3, 5) réfléchissant la lumière et/ou d'un revêtement auxiliaire au cours d'une étape quelconque du procédé de production du composite d'adhérence imprimable.

31. Utilisation d'un composite d'adhérence selon l'une quelconque des revendications 1 à 23 pour produire une affiche non adhésive transparente sur un côté.

## Patentansprüche

1. Haftverbund geeignet für die Verwendung in der Herstellung nicht-klebender Poster, wobei der Haftverbund mindestens ein Postermaterial mit einem Postersubstrat (1) und ein Trägermaterial mit einem Trägersubstrat (2) umfasst, wobei das Postermaterial und das Trägermaterial miteinander durch eine Klebstoffschicht (20) trennbar verbunden sind, und wobei das Postermaterial auf einer ersten Seite eine bedruckbare oder mit einer Bildempfängerschicht direkt oder nach Vorbehandlung versehbare Oberfläche (3) und auf einer zweiten Seite eine lichtabsorierende Oberfläche (4) aufweist, und wobei die Klebstoffschicht (20) gegenüber dem Trägermaterial bessere Haftung aufweist als gegenüber dem Postermaterial, derart, dass nach Trennung des Postermaterials vom Trägermaterial die Klebstoffschicht (20) auf dem Trägermaterial verbleibt, und wobei das Postermaterial in mindestens einem Bereich Löcher (50) aufweist, die regelmässig oder in einem regelmässigen Muster verteilt sind, derart, dass es in getrennter Form von der zweiten Oberfläche mit der lichtabsorbierenden Schicht (4) aus durchsichtig ist.

2. Haftverbund gemäss Anspruch 1, worin die dem Trägermaterial zugewandte Seite des Postermaterials die zweite Seite mit lichtabsoriernder Oberfläche (4) ist.

3. Haftverbund gemäss Anspruch 1 oder 2, worin das Postermaterial auf der ersten Seite eine bedruckbare Oberfläche (3) aufweist.

4. Haftverbund gemäss Anspruch 1 oder 2, worin das Postermaterial eine mit einer Bildempfängerschicht/-beschichtung (24) direkt oder nach Vorbehandlung versehbare Oberfläche aufweist.

5. Haftverbund gemäss irgend einem der vorangehenden Ansprüche, worin die Oberfläche (3) der ersten Seite des Postermaterials lichtreflektierend ist.

6. Haftverbund gemäss irgend einem der vorangehenden Ansprüche, worin das Trägermaterial eine erste Seite mit einer Oberfläche (5) aufweist, die bedruckbar oder mit einer Bildempfängerschicht/-beschichtung (24) direkt oder nach Vorbehandlung versehbar ist, und eine zweite Seite mit einer Oberfläche (6), die lichtabsorierend ist, wobei die lichtabsorbierende zweite Seite des Trägermaterials dem Postermaterial zugewandt ist.

7. Haftverbund gemäss Anspruch 6, worin die erste Seite des Trägermaterials eine Oberfläche (5) aufweist, die lichtreflektierend ist.

8. Haftverbund gemäss irgend einem der vorangehenden Ansprüche, worin das Postermaterial und das Trägermaterial in mindestens einem Bereich regelmässig verteilte Löcher (50) aufweisen.

9. Haftverbund gemäss irgend einem der vorangehenden Ansprüche, worin die Löcher (50) Perforierungen resp. Stanzlöcher sind.

10. Haftverbund gemäss irgend einem der Ansprüche 1-7, worin das Trägermaterial keine Löcher (50) aufweist.

11. Haftverbund gemäss Anspruch 10, worin die erste Seite des Postermaterials mit Information (30), insbesondere einem Bild und/oder einem Text, versehen ist.

12. Haftverbund gemäss irgend einem der vorangehenden Ansprüche, worin die erste Seite des Trägermaterials eine Oberfläche (5) aufweist, die per se oder dank einer Bildaufnahmeschicht bedruckbar ist.

13. Haftverbund gemäss irgend einem der vorangehenden Ansprüche, worin die Oberfläche (5) der ersten Seite des Trägermaterials mit Information bedruckt ist.

14. Haftverbund gemäss irgend einem der vorangehenden Ansprüche, worin die Oberfläche (3, 4) der ersten und/oder der zweite Seite des Postermaterials und/oder die Oberfläche (5, 6) der ersten und/oder der zweiten Seite des Trägermaterials infolge einer auf der jeweiligen Seite aufgebrachten Schicht oder infolge Einfärbung des Postersubstrats (1) oder des Trägersubstrats (2) lichtabsorierend und/oder lichtreflektierend sind.

15. Haftverbund gemäss irgend einem der vorangehenden Ansprüche, worin das Postersubstrat (1) und/oder das Trägersubstrat (2) Verbundmaterialien, insbesondere Laminate, sind.

16. Haftverbund gemäss irgend einem der vorangehenden Ansprüche, worin die erste Seite des Postermaterials und/oder die erste Seite des Trägermaterials eine Oberfläche (3, 5) aufweist, die weiss ist oder metallisiert erscheint, und/oder dass die lichtabsorierende Oberfläche (4, 6) der zweiten Seite des Postermaterials und/oder des Trägermaterials schwarz erscheint.

17. Haftverbund gemäss irgend einem der vorangehenden Ansprüche, worin mindestens ein Bereich des Postermaterials und gegebenenfalls des Trägermaterials mit regelmässig verteilten Löchern (50) versehen ist, derart, dass die Löcher (50) Durchmesser von 1 bis 5 mm, vorzugsweise von 1 bis 2 mm, aufweisen und dass die Löcher (50) 30 bis 60 %, vorzugsweise 30 bis 50 % aller Bereiche mit regelmässig verteilten Löchern ausmachen, insbesondere kreisförmigen/runden Löchern (50).

18. Haftverbund gemäss irgend einem der vorangehenden Ansprüche, worin das Postermaterial und/oder das Trägermaterial lichtabsorierend eingefärbtes Papier oder mit einer lichtabsorierenden Schicht (32) beschichtetes Papier ist oder enthält, oder dass das Postermaterial eine lichtabsorierend eingefärbte Kunststofffolie oder eine mit einer lichtabsorierenden Schicht (32) beschichtete Kunststofffolie ist oder enthält, oder dass das Postermaterial und/oder das Trägermaterial ein mehrlagiger Verbundstoff ist oder enthält, insbesondere Papier und Kunststoff oder ein Verbundstoff hergestellt aus verschiedenen Kunststoffen oder ein Verbundstoff aus Papier und/oder Kunststoff und einem oder mehreren weiteren Materialien, oder dass das Postermaterial ein Faserstoff ist oder enthält, insbesondere ein durchbrochenes Gewebe aus Textil- und/oder Kunststofffasern.

19. Haftverbund gemäss irgend einem der vorangehenden Ansprüche, worin das Postermaterial und/oder das Trägermaterial mit mindestens einer Hilfsschicht versehen sind, insbesondere einer durchsichtigen Trennschicht (23) und/oder einer Schutzschicht auf der zweiten Seite des Postermaterials oder einer die Bedruckbarkeit der ersten Seite des Postermaterials und/oder des Trägermaterials fördernden Schicht.

20. Haftverbund gemäss irgend einem der vorangehenden Ansprüche, worin der Haftverbund mit Information versehen ist und über der Information mit mindestens einer Zusatzschicht, insbesondere einer oder mehrerer Schutzschichten (34) zur Verminderung des Abriebs, zur Erhöhung der Lichtbeständigkeit, zur Erhöhung der Witterungsbeständigkeit, und/oder zum Schutz vor Graffity.

21. Haftverbund gemäss irgend einem der vorangehenden Ansprüche, worin das Trägermaterial auf beiden Seiten mit einer Klebstoffschicht (20, 20') versehen ist, wobei das Trägermaterial beidseitig mit Postermaterial versehen ist, insbesondere mit Postermaterial, welches Löcher (50) aufweist.

22. Haftverbund gemäss irgend einem der Ansprüche 1-20, worin das Trägermaterial nur auf einer Seite in Kontakt oder versehen mit einer Klebstoffschicht (20) ist.

23. Haftverbund gemäss irgendeinem der vorangehenden Ansprüche, worin die Summe aller Bereiche des Postermaterials, die Löcher (50) aufweisen, und gegebenenfalls die Summe aller Bereiche des Trägermaterials, die Löcher (50) aufweisen, mindestens 50 % der Gesamtfläche des Haftverbundes resp. des Postermaterials ausmachen, vorzugsweise mindestens 75 %, insbesondere mindestens 90 %, speziell bevorzugt etwa 100%, und stark bevorzugt ist die Summe aller Bereiche des Trägermaterials, die Löcher (50) aufweisen, 0 % oder identisch der Summe aller Bereiche des Postermaterials, die Löcher (50) aufweisen.

24. Verfahren zur Herstellung eines einseitig durchsichtigen nicht-klebenden Posters unter Verwendung eines Haftverbundes gemäss irgendeinem der vorangehenden Ansprüche, worin
ein bedruckbarer Haftverbund umfassend mindestens ein Postermaterial mit einem Postersubstrat (1) und ein Trägermaterial mit einem Trägersubstrat (2), wobei das Postermaterial und das Trägermaterial miteinander mittels einer Klebstoffschicht (20) trennbar verbunden sind und das Postermaterial auf einer ersten Seite eine bedruckbare Oberfläche (3), die lichtreflektierend ist, und auf einer zweiten Seite eine lichtabsorierende Oberfläche (4) aufweist, und wobei das Postermaterial in mindestens einem Bereich mit Löchern (50) versehen ist, derart, dass es einseitig durchsichtig ist, und wobei das Postermaterial nach der Trennung vom Trägermaterial frei von jeglicher Klebstoffschicht (20) ist,
auf der ersten Seite des Postermaterials und gegebenenfalls auf der ersten Seite des Trägermaterials mit Information bedruckt wird, und wobei die erste Seite des Postermaterials und/oder die erste Seite des Trägermaterials gegebenenfalls mit einer Schutzschicht über der Information (30) versehen wird, und dass dann das Postermaterial vom Trägermaterial getrennt wird.

25. Verfahren zur Herstellung eines bedruckbaren Haftverbundes, worin Postermaterial, das auf einer ersten Seite eine bedruckbare oder mit einer Bildempfängerschicht (24) direkt oder nach Vorbehandlung versehbare Oberfläche (3) und auf einer zweiten Seite eine lichtabsorierende Oberfläche (4) und in mindestens einem Bereich Löcher (50), die regelmässig oder in einem regelmässigen Muster verteilt sind, aufweist, derart, dass es in getrennter Form von der zweiten Seite mit der lichtabsorbierenden Oberfläche (4) aus durchsichtig ist, entfernbar mit einem nicht-löchrigen Trägermaterial mittels einer Klebstoffschicht (20) verklebt/verbunden und gegebenenfalls mit einer Bildempfängerschicht (24) und/oder einer lichtreflektierenden Beschichung versehen wird, wobei die Klebstoffschicht (20) eine bessere Haftung gegenüber dem Trägermaterial als gegenüber dem Postermaterial aufweist, derart, dass nach der Trennung des Postermaterials vom Trägermaterial, die Klebstoffschicht (20) auf dem Trägermaterial verbleibt.

26. Verfahren gemäss Anspruch 24 oder 25, worin das mindestens in einem Bereich einseitig durchsichtige Postermaterial hergestellt wird, indem ein Postermaterial, das auf einer ersten Seite eine bedruckbare Oberfläche (3) oder eine Oberfläche (3), die direkt oder nach Vorbehandlung mit einer Bildaufnahmeschicht (24) versehen werden kann; und das auf einer zweiten Seite eine lichtabsorbierende Oberfläche (4) aufweist, in mindestens einem Bereich mittels Perforation mit Löchern (50) versehen wird.

27. Verfahren gemäss Anspruch 24 oder 25, worin das Postermaterial, das mindestens in einem Bereich einseitig durchsichtig ist, hergestellt wird, indem ein Ausgangs-Haftverbund umfassend mindestens ein Postermaterial mit einem Postersubstrat (1) und ein Trägermaterial mit einem Trägersubstrat (2), worin das Postermaterial und das Trägermaterial mittels einer Klebstoffschicht (20) auftrennbar miteinander verbunden sind, und worin das Postermaterial auf einer ersten Seite eine bedruckbare oder mit einer Bildaufnahmeschicht direkt oder nach Vorbehandlung versehbare Oberfläche(3) und auf einer zweiten Seite eine lichtabsorbierende Oberfläche (4) aufweist, und worin die Klebstoffschicht (20) eine bessere Haftung gegenüber dem Trägermaterial als gegenüber dem Postermaterial aufweist, derart, dass nach Trennung des Postermaterials vom Trägermaterial, die Klebstoffschicht (20) auf dem Trägermaterial verbleibt, in mindestens seinem Bereich mittels Perforation mit Löchern (50) versehen wird, wobei diese Löcher (50) durch den ganzen Haftverbund hindurch gehen, und dann das Poster Material und das Trägermaterial getrennt werden.

28. Verfahren gemäss Anspruch 27, worin der Ausgangs-Haftverbund hergestellt wird indem ein nicht durchbrochenes Postermaterial/-substrat (1) mit einer bedruckbaren Oberfläche (3) oder mit einer Bildempfängerschicht (24) direkt oder nach Vorbehandlung versehbaren Oberfläche (3) auf seiner ersten Seite und mit einer lichtabsorbierenden Oberfläche (4)auf seiner zweiten Seite hergestellt wird entweder durch Aufbringen einer lichtabsorbierenden Schicht auf die Oberfläche der zweiten Seite des Postersubstrats (1), wobei das Postersubstrat (1) die erste Oberfläche (3) bereitstellt, oder durch Herstellung eines Laminats aus einer lichtabsorbierenden Schicht (32) und einer bedruckbaren Schicht oder einer Schicht, die direkt oder nach Vorbehandlung mit einer Bildaufnahmeschicht (24) versehbar ist, wobei das derart hergestellte Postermaterial dann mit einem Trägermaterial derart verbunden wird, dass das Postermaterial nach Trennung vom Trägermaterial keinerlei klebenden Eigenschaften aufweist.

29. Verfahren gemäss irgend einem der Ansprüche 24 bis 28, worin das verwendete Trägermaterial auf einer ersten Seite eine bedruckbare Oberfläche (5) oder eine Oberfläche (5), die direkt oder nach Vorbehandlung mit einer Bildaufnahmeschicht (24) versehbar ist, aufweist und das auf einer zweiten Seite eine lichtabsorbierende Oberfläche (6) aufweist, und worin das Trägermaterial auf der zweiten Seite mit der lichtabsorbierenden Oberfläche (6) eine Klebstoffschicht (20) aufweist.

30. Verfahren gemäss irgend einem der Ansprüche 24 bis 29, worin das Postermatérial und gegebenenfalls das Trägermaterial mit einer Bildempfängerschicht (24) und/oder mit einer lichtreflektierenden Oberfläche (3, 5) und/oder mit mindestens einer Hilfsschicht in irgendeinem Schritt des Herstellungsverfahrens des bedruckbaren Haftverbundes versehen wird.

31. Verwendung eines Haftverbundes gemäss irgend einem der Ansprüche 1 bis 23 in der Herstellung eines einseitig durchsichtigen nicht-klebenden Posters.
